# EUROPÄISCHE PATENTANMELDUNG

(11) **EP 2 100 858 A1**
(43) Veröffentlichungstag der Anmeldung: **16.09.2009**
(21) Anmeldenummer: 09003245.9
(22) Anmeldetag: 06.03.2009
(51) Int. Cl.: C03B 5/12, C03B 5/235, C03C 13/06

(54) **Vorrichtung und Verfahren zur Herstellung von silikatischen Schmelzen**

(30) Priorität: 13.03.2008 DE 102008014044
(71) Anmelder: Linde AG, 80331 München (DE); Grenzebach BSH GmbH, 36251 Bad Hersfeld (DE); Odenwald Faserplattenwerk GmbH, 63916 Amorbach (DE)
(72) Erfinder: Niehoff, Thomas, Dr., 85229 Markt Indersdorf (DE); Plaschke, Herbert, 46145 Oberhausen (DE); Jäger, Reinhard, 36251 Bad Hersfeld (DE); Rogge, Dirk, 63916 Amorbach (DE); Rudolph, Bernd, 36251 Bad Hersfeld (DE)
(74) Vertreter: Gellner, Bernd

(57) **Zusammenfassung**

Verfahren und Vorrichtung zur Herstellung silikatischer Schmelzen für die Erzeugung von hellgelben Mineralwollefasern mittels eines Kupolofens,
mit den folgenden Merkmalen:
a) die Rohstoff- Beschickung besteht aus mindestens zwei unterschiedlichen Sorten Briketts ( 8,9,10 ), wobei deren chemischen Bestandteile auf den zu erwartenden Eisenanteil abgestellt sind,
b) als stützende Struktur für den Schmelzprozess dienen Elemente und / oder Brikett - Bestandteile aus Al2O3,
c) zur Beheizung dienen mehrere, in ihrer Halterung ( 16 ) bewegliche, Hochtemperatur - Gasbrenner ( 6 ) deren prinzipielle Anordnung so gewählt ist, dass die Brennerflammen sich gegenseitig unterstützen,
d) die Auffangwanne ( 2 ) erweitert sich vom Mantel ( 15 ) des Schachtes ( 11 ) aus konisch nach unten bis zum Ofenboden ( 1 ).
sowie Steuerungsprogramm zur Prozess - Steuerung

## Beschreibung

Derzeit besteht verstärkt Bedarf an Isoliermaterial aus Mineralwolle.
Zur Erzeugung von Fasern für die Herstellung von Mineralwolle werden mineralische Schmelzen verwendet, die immer noch in so genannten Kupolöfen mit Koks als Brennstoff hergestellt werden.

Bei Kupolöfen handelt es sich um Schachtöfen die aus der Metallschmelztechnik stammen. In der Regel werden Kupolöfen zur Herstellung von Gusseisen eingesetzt. Der Kupolofen ähnelt in Aufbau und Funktionsweise stark dem Hochofen, er ist mit einer Höhe von rund 10 Metern deutlich kleiner und erreicht nicht die Temperaturen, die zum Ausschmelzen von Eisen nötig sind.
Um den Ofen zu starten wird an seinem Grund ein Holzfeuer entzündet und mit Koks bedeckt. Bei neueren Öfen wird Kohle in den Ofen gefüllt und mit Gasbrennern zum Glühen gebracht. Anschließend wird der Ofen mit mehren Schichten aus Metall und Koks gefüllt und mit Luft angeblasen. Dabei entstehen am Grund des Ofens Temperaturen bis zu 1600°C, die das Metall zum Schmelzen bringen. Die Luft zum Anblasen wird dem Ofen aus dem Windring zugeleitet und kann zur besseren Verbrennung und auch zur leichten Reduktion des Kohlenstoffgehalts des erschmolzenen Eisens mit reinem Sauerstoff versetzt werden. Je nachdem, ob die Luft vorgewärmt in den Ofen geleitet wird, oder nicht, unterscheidet man zwischen dem Heißwind Kupolofen und dem Kaltwind - Kupolofen.
Der Kupolofen wird mit Roheisen, Stahlschrott, Kreislaufmaterial und Maschinengussbruch beschickt. Die Einstellung des Kohlenstoffgehaltes des erschmolzenen Eisens erfolgt über das Verhältnis von Stahlschrott (geringer Kohlenstoffgehalt) zu Maschinengussbruch. Eine vermehrte Zugabe von Koks erhöht ebenfalls den Kohlenstoffgehalt. Ferner wird Kalk zugesetzt um die entstehende saure Schlacke zu neutralisieren und besser fließbar zu halten. Zur Entnahme des Metalls muss der Ofen etwas oberhalb seines Grundes angestochen werden. An den Anstich schließt sich ein Siphon an, der zwei Auslässe besitzt. Durch den oberen wird die Schlacke in einen Aufnahmebehälter abgeleitet. Durch den anderen wird das Eisen unter der Schlacke durchgedrückt und kann zum Beispiel in einen Vorhalteofen geleitet werden. Die Funktion des Siphons ist nur durch einen leichten Überdruck möglich.
Kupolöfen werden in zunehmendem Maße durch Induktionsöfen ersetzt, da diese weniger Schlacke und Abfälle produzieren, flexibler in der Anwendung sind und mit ihnen die Zusammensetzung des Schmelzproduktes genauer eingestellt werden kann. Allerdings können Induktionsöfen nur mit vorbehandeltem Schrott beschickt werden und sind weniger wirtschaftlich als ein großer Kupolofen.
Die Weiterentwicklung im Bereich des Kupolofen - Baus sind erdgasbetriebene Öfen, so genannte kokslose Kupolöfen. Diese haben eine bessere Wärmebilanz und sind in den Emissionswerten bedeutend niedriger.

Bei der konventionellen Anwendung von Kupolöfen für silikatische Schmelzen kommt Basalt oder ähnliches als Rohstoff zum Einsatz. Es befindet sich am Boden des Schachtes eine Wanne, in der die Schmelze aufgefangen wird. Weiter oben gibt es eine Ebene in der die Düsen zur konzentrischen Einblasung von Luft oder Sauerstoff angeordnet sind. Eine Materialsäule (Schüttung) aus Basaltbocken, Koksbrocken und Briketts steht in der Wanne. Briketts können dabei bestehen aus Rückgut, Basaltkörnern, Zusatzstoffen, Reststoffen, Abfallstoffen oder Anfallstoffen.
Ganz unten in der Wanne befindet sich die Eisenschmelze, darüber die Gesteinsschmelze bis zu einer gewissen Höhe unterhalb der Düsen. Die Schmelze kann über einen Siphon angezogen werden, ohne dass sie verunreinigt wird durch Material aus der Säule. Die Kohle wird verbrannt und erlaubt die Erzeugung der Schmelze bei 1450°C.
Koks ist in der für diesen Prozess notwendigen Qualität vielfach nicht oder nur in begrenztem Umfang zu beschaffen, weiterhin sind die Abgase aus Umweltschutzgründen unerwünscht.
Es hat nicht an Versuchen gefehlt, Gas als Brennstoff einzusetzen. Dazu werden die Gasbrenner seitlich am Brennraum angesetzt, wo etwa vorher die Luftzuführungen waren. Darüber wird ein Rost eingezogen. Weil der Schüttung über dem Rost der Koks fehlt, werden Brocken aus feuerfestem Material eingeführt, zum Beispiel aus Korund (Al2O3 ). Diese verschleißen und werden deshalb sukzessive nachbeschickt. Die Schmelze tropft nun durch den Rost.

Aus der DE 38 75 616 T2 ist ein Ofen zur Herstellung einer Schmelze zur Produktion von Mineralwolle bekannt.
Hier wird davon ausgegangen, dass bei der Produktion von Mineralwolle Minerale von Silizium und Metalloxide oder Karbonate und / oder Schlacke als Rohmaterial verwendet werden. Dieses Rohmaterial, meist Steinrohmaterial aus Basalt oder vom Diabas - Typ, wird im Allgemeinen in einem wassergekühlten Schachtofen geschmolzen und die Schmelze wird einer Spineinrichtung zugeleitet, welche die Schmelze in Fasern umformt. Hierbei wird während des Spinnvorgangs ein Bindemittel zugefügt, das aufgrund einer thermischen Behandlung die Fasern miteinander verbindet, um somit ein formbeständige Produkt zu schaffen.
Aufgrund des mit dem mineralischen Rohmaterial vermischten Kokses findet die Schmelze, die den Ofen mit ungefähr 1450°C verlässt, in einer Reduktionsatmosphäre statt. Die austretenden Abgase enthalten dann typischerweise 8 bis 10% unverbranntes Kohlenmonoxid (CO) und eine kleine Menge von Schwefelwasserstoff (H2S ), sowie auch Schwefeldioxid (SO2 ). Die deshalb notwendige Gasreinigungsanlage, sowie der Umstand, dass das im Rohmaterial vorhandene Eisenoxid wegen der Reduktionsatmosphäre zu metallischem Eisen reduziert wird, das entfernt werden muss, werden hier als Nachteil empfunden.
Als weitere Arten von Schmelzvorrichtungen werden Elektroöfen vom Wannen - Typ, sowie mit Gas oder Öl beheizte Schmelzwannen mit ihren jeweiligen Vorteilen und Nachteilen diskutiert.
Als Aufgabe liegt der obigen Druckschrift zugrunde einen Schmelzofen für die Herstellung von Mineralwolle anzugeben, der für die Umwelt nicht schädlich ist, der einen regelmäßigen Fluss liefert, dessen Temperatur der endgültigen Arbeitstemperatur entspricht, der annehmbare niedrige Anlagenkosten bietet, und an einen diskontinuierlichen Betrieb anpassungsfähig ist.
Zur Lösung dieser Aufgabe wird im Anspruch 1 der DE 38 75 616 T2 ausgegangen von einem Schmelzofen, bestehend aus einem Schacht zum Vorhalten und Schmelzen des zu schmelzenden Rohmaterials, einem im Bodenbereich des Schachtes angeordneten wassergekühlten Rost, welcher eine Schicht von keramischen Füllkörpern sowie das Rohmaterial trägt, einer unterhalb des Schachtes angeordneten Brennkammer mit einem Bodenteil zum Sammeln der aus dem Schacht herabtropfenden Schmelze und eine Ausflussöffnung zum Ablassen der Schmelze und einem in der Verbrennungskammer angeordneten Hauptbrenner.

Bei einem solchen Ofen soll im Wesentlichen unter Schutz gestellt werden, dass der Schmelzofen über den Rost im unteren Bereich des Schachtes Hilfsbrenner enthält, die zur Verhinderung der Bildung von Kanälen in dem zu schmelzenden Material den keramischen Füllkörpern benachbart sind, und dass die Bodenfläche der Verbrennungskammer größer als die Querschnittsfläche des Schachtes ist.

Auch der aus dieser Druckschrift bekannte Einsatz von Hilfsbrennern ergibt keine ausreichenden Temperaturen, was zu einer deutlich kälteren Schmelze führt. Das Herstellen der Fäden erfordert aber höhere Temperaturen. Dies kann dadurch geschehen, dass der Wanne des Schachtofens ein Vorherd angeschlossen wird oder dass die Schmelze durch einen weiteren Elektrolichtbogenofen geführt wird. Bei der Arbeit mit Gasbrennern wird oxidierend gearbeitet, es wird keine wesentliche Menge an Eisenschmelze gebildet.
Bei der Schmelzerzeugung mit Gasbrennern wird deshalb eine braune Faser gewonnen, während beim herkömmlichen Verfahren eine hellgelbe Faser erhalten wird.
Eine braune Faser wird vom Markt jedoch nicht angenommen und kann nur bei entsprechender Kaschierung verbaut werden.

Es ist deshalb die Aufgabe der erfindungsgemäßen Vorrichtung einen Kupolofen mit Gasbrennern zur Gewinnung von Mineralwolle vorzustellen, der die Erzeugung hellgelber Wolle ermöglicht und auch zur Erzeugung von Glaswolle dienen kann. Außerdem soll der Aufbau der erfindungsgemäßen Vorrichtung so gestattet sein, dass auch alte Kupolöfen nachgerüstet werden können.

Diese Aufgabe wird durch die erfindungsgemäße Vorrichtung nach Anspruch 1, bzw. ein Verfahren nach Anspruch 6 gelöst.

Im Folgenden wird die Erfindung anhand von Figuren näher beschrieben.
Es zeigen im Einzelnen:
- Fig.1:: einen erfindungsgemäßen Schachtofen im Schnitt.
- Fig.2:: die erfindungsgemäße Anordnung von Brennern
- Fig.3:: Schnittzeichnung im Bereich des Rostes

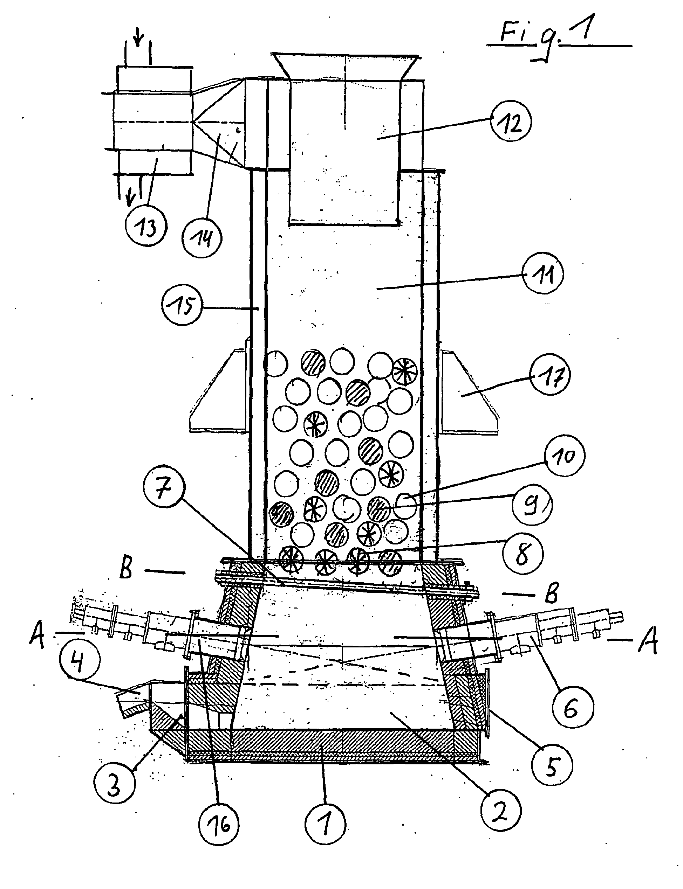

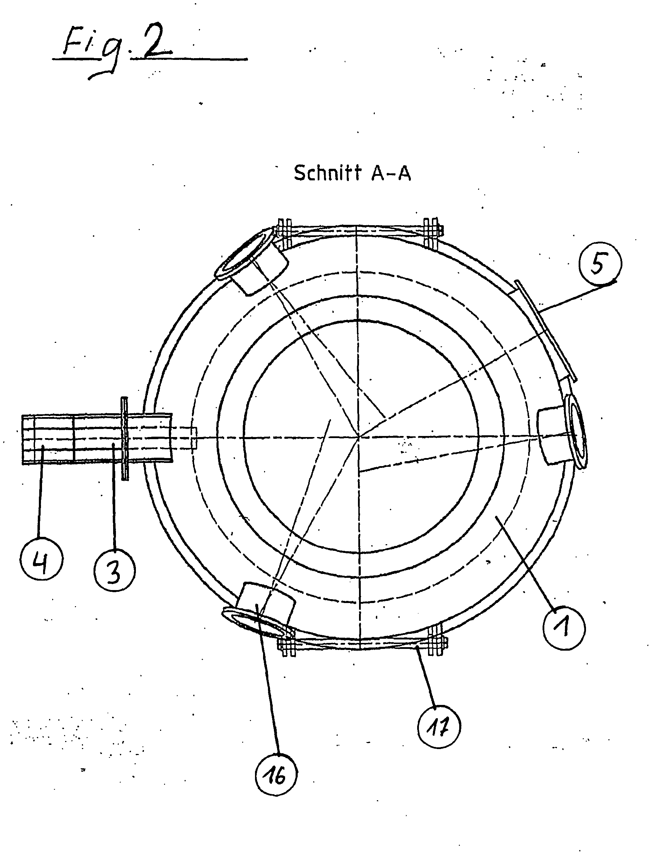

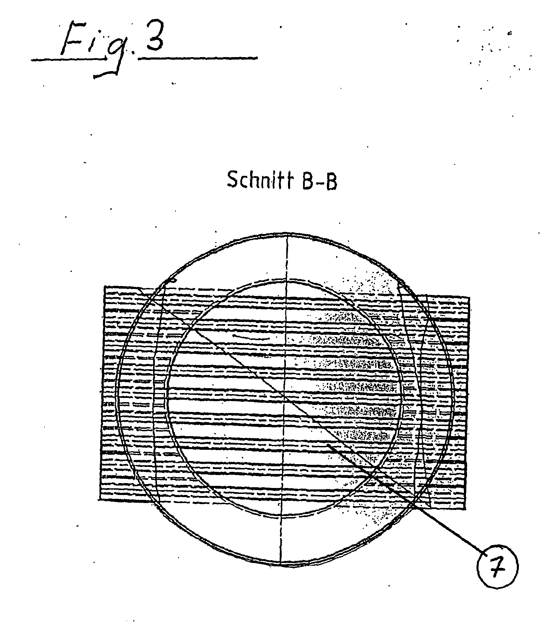

Der in der Fig.1 im Schnitt gezeigte Kupolofen besteht im Wesentlichen aus dem zylindrischen Mantel ( 15 ) des Schachtes ( 11 ) der auf der Auffangwanne ( 2 ) aufsitzt, wobei diese Wanne nach unten konisch breiter wird und der gesamte Kupolofen auf dem Ofenboden ( 1 ) aufsteht. Im Verbindungsbereich zwischen dem Schacht ( 11 ) und der Auffangwanne ( 2 ) ist in der Darstellung der Fig.1 der schräg eingebaute Auffangrost ( 7 ) zu erkennen, von dem die Schmelze in die Auffangwanne ( 2 ) tropft. Im Bodenbereich der Auffangwanne ( 2 ) ist die Schmelze über den Siphon ( 3 ) der Entnahmeöffnung ( 4 ) zu entnehmen.
Die Gas - Sauerstoffbrenner ( 6 ) sind durch ihren Sitz in der schräg angeordneten Wand der Auffangwanne ( 2 ) zur Längsachse des Schachtes ( 11 ) ebenfalls schräg angeordnet. Die genaue Lage dieser Brenner ist aus dem Schnitt A-A ersichtlich, der der Fig.2 zu entnehmen ist. Desgleichen ist eine Draufsicht des Auffangrost ( 7 ) aus dem Schnitt B-B der Fig. 3 zu entnehmen.
Als Beispiel für eine bestimmte Beschickung des Ofens sind im Schacht ( 11 ) in der Fig.1 Aluminiumoxidkugeln ( 8 ), Aluminiumoxid - Mineral - Briketts ( 9 ) und Mineral - Briketts ( 10 ) eingezeichnet.
Im Einlassbereich des Schachtes ( 11 ) ist in der Fig.1 die Einfüllöffnung ( 12 ) dargestellt in die der Abluftkanal ( 14 ) mündet. Die über den Abluftkanal ( 14 ) entnommene Prozesswärme wird über den Wärmetauscher ( 13 ) einer weiteren Verwendung zugeführt. Die Stabilisatoren und Halterungen ( 17 ) dienen der mechanischen Befestigung und Stabilisierung des Mantels ( 15 ) am Schacht ( 11 ).

In der Fig. 2 ist im Schnitt A-A die erfindungsgemäße Anordnung von gas - Sauerstoffbrennern ( 6 ) zu erkennen. Am Beispiel von 3 Brennern ( 6 ) ist hier dargestellt, wie sich die Brennerflammen wegen der in Relation zum Kreisdurchmesser der Auffangwanne ( 2 ) geneigten Einbauachse der Brennerhalterung ( 16 ) nicht nur gegenseitig nicht beeinflussen sondern sich auch noch unterstützen. Der Siphon ( 3 ) mit der Entnahmeöffnung ( 4 ) befindet sich in einem, in Relation zu den Brennerflammen, günstigen Bereich.

Bei den Gasbrennern kommen Hochtemperatur - Gasbrenner neuester Bauart zum Einsatz. Sie liefern Flammtemperaturen von ca. 1800°C, womit ohne Schwierigkeiten eine Schmelzerzeugung bei 1450°C erreicht werden kann. Durch die Verwendung dieser Brenner kann die Schmelzleistung des Prozesses über die Brennerleistung und die Temperatur der Schmelze über den Sauerstoffanteil der Brenner gesteuert werden.

In der Fig.3 sind die vom Kühlmedium durchflossenen Rohre des Auffangrostes ( 7 ) in Relation zu den Abmessungen des Mantels ( 15 ) dargestellt. Diese sind von Kühlmittel durchflossen, dessen Temperatur und Menge steuerbar sind.

Wesentlich für den erfindungsgemäßen Kupolofen ist die Beschickung des Schachtes ( 11 ) mit Briketts unterschiedlicher Zusammensetzung zur Erzeugung hellfarbiger Wolle.
Da der Silikatschmelze durch Reduktion kein Eisen entzogen wird, wird die chemische Zusammensetzung der Rohstoffe auf den verringerten Eisenanteil abgestimmt. Denn die Beschickung des Kupolofens besteht erfindungsgemäß nicht mehr aus einer Ansammlung von Basaltbrocken, Koks und Briketts, sondern nur noch aus Briketts. Auf diese Weise wird die Reduzierung des Eisens durch den Herstellungsprozess der Briketts in einen Vorprozess verlagert.
Hier wird unterschieden zwischen reinen Aluminiumoxid - Briketts in Kugelform ( bestehend im Wesentlichen aus Al2O3 ), so genannten Aluminiumoxid- Kugeln ( 8 ), Aluminiumoxid - Mineral - Briketts ( 9 ) und Mineral Briketts ( 10 ). Die Aluminiumoxid - Mineral - Briketts ( 9 ) können zum Beispiel aus 50% Basalt und 50% Al2O3 bestehen und die Mineral - Briketts aus 50% Basalt und 50% silikatischem Material ( andere Gesteine, Rückgut aus der Anlage, andere Reststoffe), das gegenüber Basalt an Alkalioxiden angereichert ist..

Die wesentliche Funktion der Aluminiumoxid - Kugeln ( 8 ) aus im Wesentlichen Al2O3, wichtigster Nebengemengteil ist hier Cr203 oder des Bestandteils von Al2O3 in Briketts besteht darin, dass dem Al2O3 eine Stützfunktion im gesamten Schmelzprozess zukommt. Denn Al2O3 verzehrt sich zwar während des Schmelzprozesses langsam aber es verhindert insgesamt, dass sich die zu schmelzenden Mineralbestandteile durch den Auffangrost ( 7 ) bewegen bevor sie ganz geschmolzen sind, denn Al2O3 schmilzt erst bei Temperaturen von etwa 2050°C.

Die Zusammensetzung der beim Schmelzprozess verwendeten Briketts ( 9,10 ) richtet sich nach der Zusammensetzung des jeweils verwendeten Basalts.
Die Schmelzcharakteristik ( Verlauf der liquidus - solidus - Kurven ) der unterschiedlichen Briketts sollte in etwa ähnlich sein, jedoch sollte das Aufschmelzen auf unterschiedlichen Temperaturniveaus stattfinden. Der Prozess kann auch durch nur eine Sorte auf die Temperatur und Oxitation abgestimmten Briketts erfolgen.

Mit dem Begriff "Basalt " sind hier nicht nur Gesteinszusammensetzungen von Basalten und Diabasen in Mitteleuropa gemeint, die durch Korrekturen mit Karbonatgestein und Rückgut einfach zu idealisierten Mineralwolleschmelze - Zusammensetzungen optimiert werden können.
Denn in anderen Teilen der Welt findet man solche Basalte und Diabase nicht, so werden in vielen Weltgegenden andere Gesteine mit höheren Siliziumdioxid - Anteilen eingesetzt.
Korrekturen, die von deren Zusammensetzungen zum leicht zu korrigierenden Basalt, zusätzlich gemacht werden müssen, sind in der vorliegenden Offenbarung nicht diskutiert. Dem Fachmann ist jedoch klar, dass bei entsprechenden Verhältnissen solche Korrekturen vorgenommen werden müssen.

In einer weiteren Ausgestaltung der Erfindung können die Gas- Brenner ( 6 ) in den jeweiligen Brenner - Halterungen beweglich angeordnet sein und in ihrer Positionierung reproduzierbar veränderbar sein.
Die Stellung der Brenner ( 6 ) kann nicht nur einzeln sondern auch im Hinblick auf das Zusammenwirken mit den anderen Brennern ( 8 ) gesteuert und überwacht werden. Die hierfür benötigten Positionsgeber und flammenoptischen Überwachungs - Sensoren sind dem Fachmann bekannt.
Für die mechanische Ausgestaltung der beweglichen Brenner ( 6 ) wird erfindungsgemäß eine kardanische Aufhängung vorgeschlagen.
Auf diese Weise kann nicht nur der Schmelzprozess gesteuert werden, es kann auch der Zustand der Schmelze in der Auffangwanne ( 2 ) überwacht und gesteuert werden.

Als Voraussetzung für die Zusammensetzung der erfindungsgemäßen Briketts ist bei jeder neuen Charge an Basaltmaterial deren chemische Zusammensetzung zu ermitteln und es sind entsprechend dieser Zusammensetzung die Bestandteile der Briketts und deren Mengenverhältnisse untereinander zu wählen.

In einer weiteren Ausbaustufe erfolgt erfindungsgemäß die Zufuhr der Rohstoffe, bzw. der Briketts ( 8, 9, 10 ) automatisch oder halbautomatisch mittels einer Überwachung und Steuerung an einem Monitor. Als Grundlage einer solchen automatischen Steuerung des gesamten Schmelzprozesses dienen die Ausgangssignale von, dem Fachmann bekannten, Sensoren zur Überwachung des gesamten Schmelzprozesses. Hierzu werden die Parameter der chemischen Bestandteile der unterschiedlichen Chargen der verwendeten Briketts ebenso in den Ablauf der Steuerung einfließen wie die Parameter der Abgase und die Temperatur und Farbe der Schmelzfasern.
Es ist selbstverständlich dass die überschüssige Prozesswärme, soweit wirtschaftlich vertretbar, wieder dem eigentlichen Fertigungsprozess der Mineralfasern zugeführt wird. So kann zum Beispiel die Brennerluft aus überschüssiger Prozesswärme vorgewärmt werden.
Durch das erfindungsgemäße Verfahren kann teurer Koks eingespart werden, die gesamte Anlage ist beliebig abschaltbar und es können bestehende Anlagen ohne größere Schwierigkeiten umgerüstet werden.
Das erfindungsgemäße Verfahren eignet sich auch für die Erzeugung von Glasschmelzen für die Herstellung von Glaswolle. Für diesen Fall ist dem Fachmann bekannt, dass die Anlage eine schützende Ausmauerung erfahren muss und die Brikettzusammensetzung entsprechend gestaltet werden muß und eine Anpassung der Schmelztemperatur erforderlich ist.

Die interaktive Steuerung der jeweils herrschenden Prozessparameter in Verbindung mit der Erfassung der Bestandteile der verwendeten Material - Chargen und der Qualitäsbewertung der erhaltenen Mineralfasern sowie die Überwachung der Signale der verwendeten Sensoren erfordert ein spezielles Steuerungsprogramm.

### Bezugszeichenliste

- ( 1 ): Ofenboden
- ( 2 ): Auffangwanne
- ( 3 ): Siphon
- ( 4 ): Entnahmeöffnung
- ( 5 ): Montageöffnung
- ( 6 ): Gas - Sauerstoffbrenner
- ( 7 ): Auffangrost
- ( 8 ): Aluminiumoxid - Kugeln
- ( 9 ): Aluminiumoxid - Mineral - Brikett
- ( 10 ): Mineral - Brikett
- ( 11 ): Schacht
- ( 12 ): Einfüllvorrichtung
- ( 13 ): Wärmetauscher
- ( 14 ): Abluftkanal
- ( 15 ): Mantel
- ( 16 ): Brenner - Halterung
- ( 17 ): Stabilisator und Halterung

## Patentansprüche

1. Kupolofen zur Herstellung silikatischer Schmelzen für die Erzeugung von hellfarbigen Mineralwollefasern, mit den folgenden Merkmalen:
a) die Rohstoff - Beschickung besteht aus mindestens zwei unterschiedlichen Sorten Briketts ( 8,9,10 ), wobei deren chemische Bestandteile auf den zu erwartenden Eisenanteil abgestellt sind,
b) als stützende Struktur für den Schmelzprozess dienen die Bestandteile von Al₂O₃ in den Briketts,
c) zur Beheizung dienen mehrere Hochtemperatur - Gasbrenner ( 6 ) deren Anordnung so gewählt ist, dass die Brennerflammen sich gegenseitig unterstützen,
d) die Auffangwanne ( 2 ) erweitert sich vom Mantel ( 15 ) des Schachtes ( 11 ) aus konisch nach unten bis zum Ofenboden ( 1).

2. Kupolofen nach Anspruch 1, **dadurch gekennzeichnet, dass** die Gasbrenner (6) in ihrer Halterung (16) beweglich angeordnet sind.

3. Kupolofen nach Anspruch 1 oder 2, **dadurch gekennzeichnet, dass** die Gasbrenner ( 6 ) in der konisch verlaufenden Wand einer kreisrunden Auffangwanne ( 2 ) an den Endpunkten eines gleichseitigen Dreiecks angeordnet sind, wobei deren Zentralachsen so geneigt sind, dass sie mit der Diagonalen des Durchmessers der Auffangwanne ( 2 ) einen Neigungswinkel von 8 bis 12 Grad bilden.

4. Kupolofen nach Anspruch 3,
**dadurch gekennzeichnet, dass** der Neigungswinkel der Zentralachsen der Brenner ( 6 ) reversibel einstellbar ist.

5. Kupolofen nach einem der Ansprüche 1 bis 4,
**dadurch gekennzeichnet, dass** die Rohstoff - Beschickung des Ofens aus Aluminiumoxidkugeln ( 8 ), bestehend im Wesentlichen aus Al2O3, und Briketts ( 9, 10 ) besteht, deren Bestandteile etwa zu 50% aus Basalt und zu 50% aus silikatischem Material wie Gesteinen oder Rückgut, das gegenüber Basalt an Alkalioxiden angereichert ist, bzw. etwa aus 50% Basalt und 50% Al₂O₃, besteht.

6. Kupolofen nach einem der Ansprüche 1 bis 5,
**dadurch gekennzeichnet, dass** die Rohstoff - Beschickung aus Briketts mit einem Gehalt von100% Basalt, sowie Briketts mit 50% Basalt und 50% aus silikatischem Material, wie Gesteine oder Rückgut, das gegenüber Basalt an Alkalioxiden angereichert ist, besteht.

7. Verfahren zur Herstellung silikatischer Schmelzen für die Erzeugung von hellgelben Mineralwollefasern mittels eines Kupolofens, wobei:
a) der Kupolofen mit mindestens zwei unterschiedlichen Sorten Briketts ( 8,9,10 ) beschickt wird, wobei deren chemische Bestandteile auf den zu erwartenden Eisenanteil abgestellt sind und wobei die Bestandteile aus Al₂O₃ in den Briketts als stützende Struktur für den Schmelzprozess dienen,
b) wobei der Kupolofen mit mehreren Hochtemperatur - Gasbrennern beheizt wird, wobei die Gasbrenner so angeordnet sind, dass die Brennerflammen sich gegenseitig unterstützen,
c) und wobei sich die Auffangwanne ( 2 ) vom Mantel ( 15 ) des Schachtes ( 11 ) aus konisch nach unten bis zum Ofenboden ( 1 ) erweitert.

8. Verfahren nach Anspruch 7,
**dadurch gekennzeichnet, dass** die Gasbrenner ( 6 ) in der konisch verlaufenden Wand einer kreisrunden Auffangwanne ( 2 ) an den Endpunkten eines gleichseitigen Dreiecks angeordnet werden, wobei deren Zentralachsen so geneigt sind, dass sie mit der Diagonalen des Durchmessers der Auffangwanne ( 2 ) einen Neigungswinkel von 8 bis 12 Grad bilden.

9. Verfahren nach Anspruch 8,
**dadurch gekennzeichnet, dass** der Neigungswinkel der Zentralachsen der Brenner ( 6 ) reversibel einstellbar ist.

10. Verfahren nach einem der Ansprüche 7 bis 9,
**dadurch gekennzeichnet, dass** der Ofen beschickt wird mit Aluminiumoxid-Briketts ( 8 ) in Kugelform und mit Briketts ( 9, 10 ), deren Bestandteile etwa zu 50% aus Basalt und zu 50% aus silikatischem Material, wie Gesteine oder Rückgut, das gegenüber Basalt an Alkalioxiden angereichert ist, bzw. etwa aus 50% Basalt und 50% Al₂O₃, bestehen.

11. Verfahren nach einem der Ansprüche 7 bis 9,
**dadurch gekennzeichnet, dass** der Kupolofen beschickt wird mit Briketts mit einem Gehalt von 100% Basalt, sowie mit Briketts mit 50% Basalt und 50% anderem silikatischen Material, wie Gesteine oder Rückgut, das gegenüber Basalt an Alkalioxiden angereichert ist.

12. Verfahren nach einem der Ansprüche 7 bis 11,
**dadurch gekennzeichnet, dass** die Steuerung der Brennerstellung, der Brennerleistung und / oder des Sauerstoffgehalts der Brennerzuluft in Abhängigkeit von der Art, dem Gehalt und der Menge der Beschickung gesteuert wird.

13. Computerprogramm mit einem Programmcode zur Durchführung der Verfahrensschritte nach einem der Ansprüche 7 bis 12, wenn das Programm in einem Computer ausgeführt wird.

14. Maschinenlesbarer Träger mit dem Programmcode eines Computerprogramms zur Durchführung des Verfahrens nach einem der Ansprüche 7 bis 12, wenn das Programm in einem Computer ausgeführt wird.
